# EUROPÄISCHE PATENTSCHRIFT

(11) **EP 0 305 780 B1**
(45) Veröffentlichungstag und Bekanntmachung des Hinweises auf die Patenterteilung: **09.11.1994**
(21) Anmeldenummer: 88113003.3
(22) Anmeldetag: 10.08.1988
(51) Int. Cl.: G01S 11/00, G01S 5/18

(54) **Verfahren und Vorrichtung zur Fehlerverminderung bei der Messung räumlicher Bewegung von Messpunkten mittels Ultraschallsignalen**
Method and apparatus for error reduction in the measurement of the spatial movement of points to be measured by means of ultrasonic signals
Procédé et dispositif de réduction des erreurs dans le cadre de la mesure d'un mouvement dans l'espace de points de mesure, au moyen de signaux ultrasonores

(30) Priorität: 20.08.1987 DE 3727837
(43) Veröffentlichungstag der Anmeldung: 08.03.1989
(73) Patentinhaber: Brunner, Wolfgang, D-88167 Maierhöfen (DE); von Zech, Ludwig, D-88167 Maierhöfen (DE)
(72) Erfinder: Brunner, Wolfgang, D-88167 Maierhöfen (DE); von Zech, Ludwig, D-88167 Maierhöfen (DE)
(74) Vertreter: Bohnenberger, Johannes, Dr.

(56) Entgegenhaltungen:
- EP-A- 0 152 905
- WO-A-87/04549
- DE-A- 2 620 437
- GB-A- 2 170 907
- PATENT ABSTRACTS OF JAPAN, Band 5, Nr. 88 (P-65)[760], 9. Juni 1981;& JP-A-56 35 078 (IZUMI SEIKI SEISAKUSHO K.K.) 07-04-1981

## Beschreibung

Die Erfindung betrifft ein Verfahren nach dem Oberbegriff des Patentanspruches 1, sowie eine Vorrichtung zur Durchführung des Verfahrens nach dem Oberbegriff des Patentanspruches 11.

In der Medizin, insbesondere Rehabilitationsmedizin und Sportmedizin, aber auch in der Orthopädie und Neurologie, gilt es oftmals, Analysen der menschlichen Körperbewegungen durchzuführen. Hierbei kommt es darauf an, daß die Relativbewegung von Körperteilen zueinander und zur Umgebung (zum Boden) genau und störungsfrei gemessen und aufgezeichnet werden kann. Photographische Verfahren (Film, Video, sind für die Bewegungsanalysen nur sehr bedingt einsetzbar, da jedes Bild einzeln vermessen und als Digitalwert in die Analysevorrichtung, nämlich einen Computer, eingegeben werden muß. Darüber hinaus sind diese Verfahren relativ langsam. Aus der DE-PS 34 06 179 und 34 06 180 sind Vorrichtungen zur Ortsbestimmung eines Meßpunktes bekannt, wobei die Meßpunkte am Menschen oder an Modellen angebracht sein können. Wenn man z. B. die Armbewegungen eines Läufers relativ zum Körper messen will, so tritt in der Praxis bei den bekannten Anordnungen das Problem auf, daß der Arm während des Laufens an den Schallsendern vorbei streicht, welche am Körper befestigt sind. Dadurch treten Störungen der Schallsignale auf, die zu einer Verfälschung des Meßergebnisses führen. Dies sei nur ein Beispiel für die möglichen Hindernisse, die in den Schallweg zwischen Sendern und Empfängern gelangen können.

Aus der EP 0 152 905 A3 ist ein Verfahren und eine Vorrichtung zum Messen des Ortes eines Meßpunktes in einem vorgegebenen Koordinatensystem mit Hilfe von Ultraschallimpulsen bekannt. Dieses Verfahren bzw. die zugehörige Vorrichtung dient zur Darstellung von Bewegungsabläufen und wird in der medizinischen Diagnostik angewandt. Als Problem wird dort herausgestellt, daß die verwendeten Ultraschallsender, die bei ihrem Anstoß eine kugelsymmetrische Stoßwelle abstrahlen, eine gewisse Abklingzeit des Wellenzuges aufweisen. Schnellere Bewegungen lassen sich daher nicht befriedigend darstellen. Des weiteren ist die Ortsauflösung des Meßpunktes unzureichend. Zur Lösung dieses Problems wird vorgeschlagen, den Ultraschallsender zu auszubilden, daß der gesendete Stoßimpuls eine möglichst steile Anstiegsflanke besitzt und daß der Impuls nur eine geringe Anzahl von Schwingungen enthält, d.h. schnell abklingt.

Die Schwierigkeiten, die bei der Anwendung eines derartigen Verfahrens bzw. einer derartigen Vorrichtung auftreten, wenn eine Unterbrechung der Übertragungsstrecke zwischen Ultraschallsender und -empfänger, z.B. durch Abschattung, auftritt, sind nicht diskutiert.

Die deutsche Offenlegungsschrift 26 20 437 beschreibt ein Gerät zur Distanzmessung zwischen einem Meßobjekt mittels eines Ultraschallsenders und eines Ultraschallempfängers, wobei die Signallaufzeit im Gerät ermittelt und in Längenmaße umgesetzt wird. Als dortige Aufgabe wird die Beseitigung der Auswirkungen von Falschmessungen infolge von Reflexionen an anderen Gegenständen genannt.

Hierfür wird das Gerät zur Distanzmessung so aufgebaut, daß in ein erstes Gehäuse der Ultraschallempfänger, die Meßuhr mit Auswertungselementen und das Anzeigefeld und in ein zweites Gehäuse der Ultraschallsender untergebracht ist. Beide Gehäuse sind räumlich getrennt angeordnet und derart elektrisch gekoppelt, daß der von der Auslösetaste, welche sich im ersten Gehäuse befindet, ausgehende Startimpuls gleichzeitig den Start der Meßuhr und die Abgabe des Ultraschallsignals aus dem zweiten Gehäuse bewirkt. Diese Kopplung kann durch eine Kabelverbindung oder durch eine Lichtübertragungsstrecke oder Funkkopplung erfolgen.

Die Problematik des Auftretens von Meßfehlern, wenn die Ultraschallübertragungsstrecke abgeschattet oder unterbrochen ist, wird dort nicht erwähnt. Die beispielsweise aufgeführte Lichtkopplung dient also ausschließlich der Übertragung von Steuerinformationen bzw. der Synchronisation zwischen den in den jeweiligen Gehäusen angeordneten Aggregaten. Die Beseitung oder das Erkennen von Störungen im Ultraschallübertragungsweg ist nicht möglich.

Ausgehend vom oben genannten Stand der Technik ist es Aufgabe der vorliegenden Erfindung, Verfahren und Vorrichtung der eingangs genannten Art dahingehend weiterzubilden, daß Störungen im Ultraschallübertragungsweg erkannt und der Einfluß derartiger Störungen auf die erhaltenen Meßergebnisse verringert wird.

Diese Aufgabe wird verfahrensmäßig durch die im Kennzeichen des Anspruches 1 angegebenen Merkmale, vorrichtungsmäßig durch die im Kennzeichen des Anspruches 11 angegebenen Merkmale gelöst.

Die Lösung der Aufgabe kann also darin bestehen, daß man den Schallweg zwischen Schallsender und Schallempfänger über Licht(-impulse) abtastet oder überprüft und die gemessenen Schallaufzeiten nur dann der weiteren Berechnung zugrundelegt, wenn der Schallweg zumindest für Licht frei ist. Dies bedeutet aber gleichzeitig, daß der Schallweg auch für den Schall selbst frei ist. Auf diese Weise lassen sich Abschattungen oder Beugungserscheinungen, die zu einer Verzerrung bzw. Veränderung von Schallaufzeiten führen, sicher feststellen. Eine andere Möglichkeit, die gegebenenfalls zusätzlich zur vorbeschriebenen Maßnahme genutzt werden kann, liegt darin, daß man die Schallsignale selbst zur Beurteilung der "Qualität" des Schallweges heranzieht. Dies kann dadurch geschehen, daß man die Schallamplitude bzw. die Dämpfung des Schalls im Schallweg beurteilt und dann das Signal als "fehlerhaft" beurteilt, wenn die Amplitude nicht hinreicht. Eine andere Möglichkeit besteht darin, die Laufzeit des Schallsignals mit einem Erwartungswert zu vergleichen und solche Schallsignale zu verwerfen (zur weiteren Verrechnung nicht heranzuziehen), die außerhalb des Erwartungsbereiches liegen.

Weitere erfindungswesentliche Merkmale ergeben sich aus den Unteransprüchen und der nachfolgenden Beschreibung bevorzugter Ausführungsformen der Erfindung, die anhand von Abbildungen näher erläutert werden. Hierbei zeigt:
- Fig. 1: eine schematisierte Darstellung der Meßanordnung,
- Fig. 2: ein Blockdiagramm einer ersten Ausführungsform von Sender und Empfänger,
- Fig. 3: eine zweite bevorzugte Ausführungsform von Sender und Empfänger,
- Fig. 4: ein Diagramm zur Erläuterung eines Zeitfensters,
- Fig. 5: ein Blockschaltbild einer weiteren bevorzugten Ausführungs eines Senders,
- Fig. 6: ein Diagramm zur Erläuterung der Funktionsweise der Anordnung nach Fig. 5,
- Fig. 7: eine weitere bevorzugte Ausführungsform eines Senders.

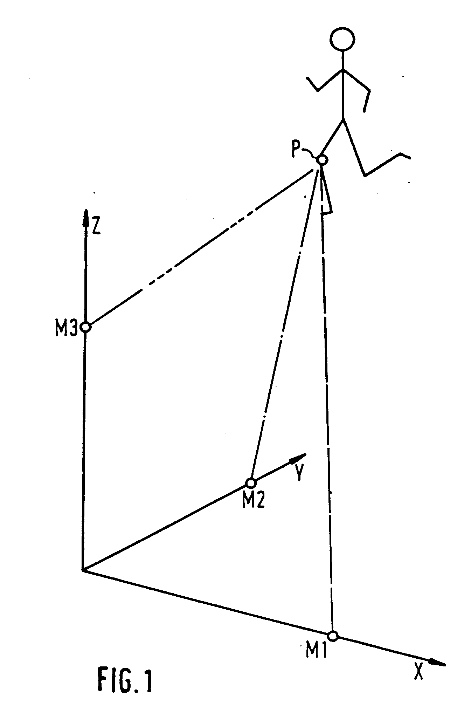

Bei der Erfindung dreht es sich darum, daß, wie in Fig. 1 gezeigt, ein Meßpunkt P, der sich an einem sich bewegenden Objekt befindet, relativ zur Umgebung, also den Raumkoordinaten x, y und z festgelegt bzw. vermessen wird. Hierzu werden (mindestens) drei Meßorte M1 bis M3 festgelegt, die voneinander in allen drei Raumkoordinaten beabstandet sind. Zur Gewinnung der Meßwerte wird hiermit ausdrücklich Bezug auf die DE-PS 34 06 179 genommen, in welcher alle zur Nacharbeitung notwendigen Hinweise zu finden sind.

Man kann nun den Schall entweder von den Meßorten M1 bis M3 abstrahlen und am Meßpunkt P empfangen, oder aber die Schallrichtung umgekehrt wählen. Im ersteren Fall wären dann entsprechende Schallempfänger am Meßort P anzuordnen, das empfangene Signal muß von dort der Recheneinheit zum Auswerten der Signale zugeführt werden. Diese Anordnung ist zwar in besonderen Anwendungsfällen möglich, im allgemeinen wird aber die umgekehrte Schallrichtung, also Schallabstrahlung am Meßpunkt P und Schallempfang am Meßort M1 bis M3 gewählt werden. Der letztere Fall ist in allen weiteren Betrachtungen zugrundegelegt, jedoch ist auch immer die umgekehrte Schallaufrichtung möglich.

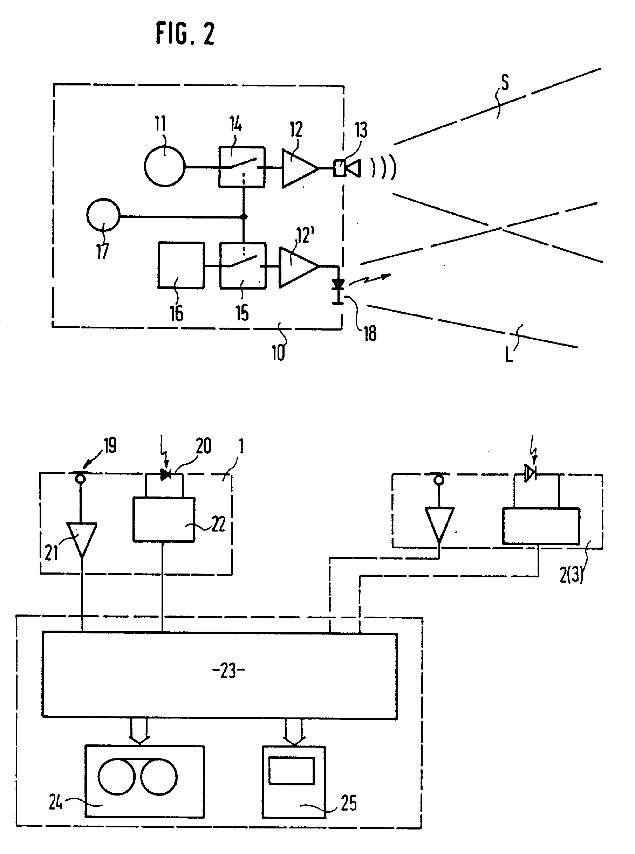

Bei der in Fig. 2 gezeigten bevorzugten Ausführungsform der Erfindung umfaßt jeder Schallsender 10, der an einem Meßpunkt P anzuordnen ist, einen Oszillator 11, der eine entsprechend hohe (Ultraschall-)frequenz generiert und über einen elektronischen Schalter 14 mit dem Eingang eines Leistungsverstärkers 12 verbunden ist, der über seinen Ausgang einen Schallwandler 13, z. B. einen Piezowandler ansteuert. Der Piezowandler 13 strahlt dann ein Schallsignal S ab, und zwar mit einer, durch den Schallwandler 13 bestimmten Richtcharakteristik ab, die in Fig. 2 strichliert angedeutet ist.

Der Schalter 14 wird über einen Taktgenerator 17 angesteuert, so daß Schallpulse mit definierter Dauer und in regelmäßigen Abständen abgestrahlt werden. Weiterhin steuert der Taktgenerator 17 einen weiteren elektronischen Schalter 15 ab, der ein elektrisches Signal auf den Eingang eines weieren Leistungsverstärkers 12′ führt, über dessen Ausgang ein Lichtsender 18, z. B. eine (Infrarot)Leuchtdiode angesteuert wird. Schallsignal und Lichtpuls werden also synchron ausgesandt. Das Lichtsignal kann im einfachsten Fall ein Lichtpuls mit derselben Dauer sein, wie das abgestrahlte Ultraschallsignal. Bei der in Fig. 2 gezeigten bevorzugten Ausführungsform der Erfindung wird das Lichtsignal jedoch über einen Codegenerator 16 moduliert, so daß bei Verwendung mehrerer Sender 10 (an verschiedenen Meßpunkten P) jedem Sender 10 hinsichtlich des abgestrahlten Lichtpulses eine individuelle Kennung zugeordnet sein kann. Beim Empfang eines Lichtsignales kann dann entschieden werden, zu welchem Sender 10 dieses Lichtsignal gehört.

Der Empfang der abgestrahlten Schallsignale geschieht über drei Meßempfänger 1 bis 3, die jeweils ein Mikrophon 19 mit nachgeschaltetem Vorverstärker 21, sowie einen Lichtempfänger 20 mit nachgeschaltetem Signalwandler 22 umfassen. Die verstärkten bzw. gewandelten Schall-/Lichtsignale werden einer Recheneinheit 23 zugeführt, in welcher die (Analog-) Signale digitalisiert und weiterverarbeitet werden. Das Verarbeitungsergebnis kann dann in einer Aufzeichnungseinheit 24 aufgezeichnet und gegebenenfalls gleichzeitig auf einem Bildschirm 25 dargestellt werden. Die Recheneinheit 23 ist also Minicomputer zu verstehen und beinhaltet die üblichen Speicher- und Rechenschaltungen.

Die Funktionsweise der in Fig. 2 gezeigten Anordnung ist nun folgendermaßen:

Wenn (bei einem Meßpunkt P) der Taktgenerator 17 die beiden Schalter 14 und 15 schließt, so werden gleichzeitig Ultraschall- und Lichtsignale ausgesandt. Beide Signale sind pulsförmig, wobei es insbesondere auf eine scharfe Anstiegsflanke ankommt. Das Lichtsignal L (s. Fig. 2) gelangt ohne relevante Verzögerung zu den Lichtempfängern 20 der Meßempfänger 1 bis 3 und dadurch zur Recheneinheit 23. Der entsprechende Schall-Puls gelangt mit einer Verzögerung zu den Mikrophonen 19 und damit ebenfalls zur Recheneinheit 23, die von der Entfernung zwischen Sender 10 und Meßempfängern 1 bis 3 abhängt. Aufgrund der bekannten Schallgeschwindigkeit (die z. B. mittels einer dauernd arbeitenden Eichvorrichtung mit Schallsender und Schallempfänger in festem Abstand meßbar ist) kann in der Recheneinheit 23 bei jedem Empfang eines Schallpulses die Entfernung zwischen Sender 10 und jedem der Meßempfänger 1 bis 3 festgestellt und gespeichert werden. Auf diese Weise wird die Relativposition vom Sender 10 zu den Empfängern 1 bis 3 punktförmig abgetastet und gespeichert.

Gleichzeitig wird in der Recheneinheit (23) nur dann ein am Mikrophon 19 ankommender Schallpuls zur Auswertung der Entfernungsmessung herangezogen, wenn der zu diesem Schallpuls gehörende Lichtpuls eine entsprechende Zeitspanne vorher eingetroffen ist. Das heißt also, daß bei dieser bevorzugten Ausführungsform der Erfindung davon ausgegangen wird, daß zwischen dem Aussenden der Schall- und Lichtpulse und dem Eintreffen des Schallpulses kein Hindernis in den Schallweg zwischen Sender 10 und Empfänger 1 bis 3 gelangt. Weiterhin muß bei dieser Ausführungsform darauf geachtet werden, daß der Taktgenerator 17 die Schalter 14 und 15 in größeren Zeitabständen betätigt, als sie der Laufzeit der Schallimpulse entsprechen.

Um den Einfluß von Reflexionen des Schallsignales zu eliminieren, die dazu führen könnten, daß ein abgesandtes Schallsignal zweimal am Meßort ankommt, ist es von Vorteil, wenn man nach Eintreffen eines Lichtpulses den gerade aktuellen Meßvorgang dann abschließt, wenn der erste Schallimpuls am Meßort eingetroffen ist. Das "Beobachtungsfenster" wird erst dann wieder geöffnet, wenn der nächste Lichtpuls am entsprechenden Meßempfänger 1 bis 3 ankommt.

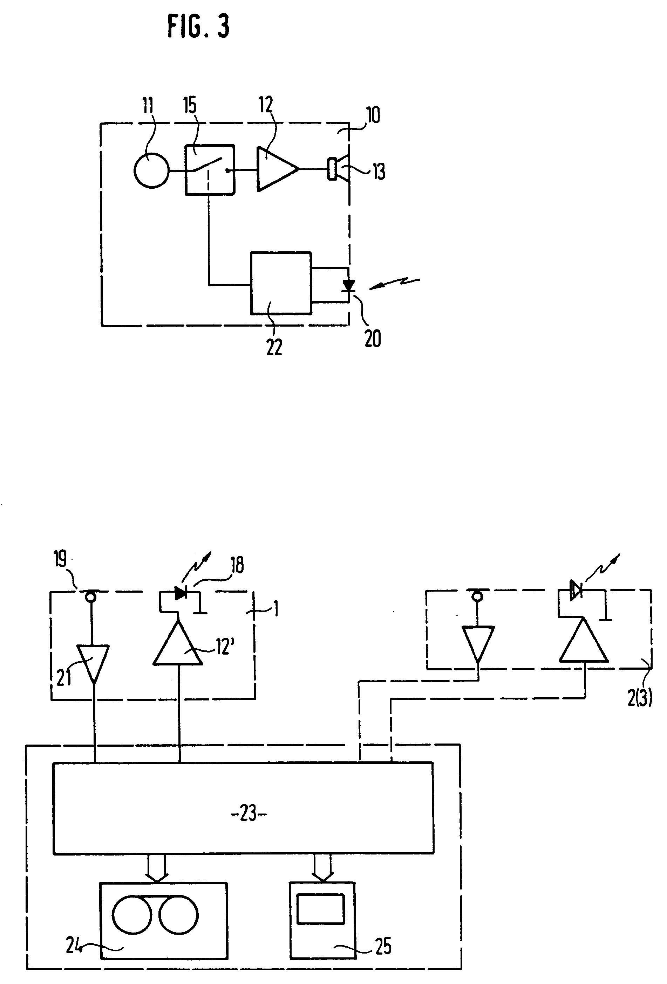

Bei einer weiteren, in Fig. 3 gezeigten bevorzugten Ausführungsform der Erfindung wird die Abstrahlung eines Schallpulses nicht durch einen im Schallsender 10 angeordneten Taktgenerator 17 bestimmt, sondern durch einen in der Recheneinheit 23 angeordneten Taktgenerator. Dieser triggert einen Lichtpuls, der von jeweils einem Lichtsender 18 in jedem der Meßempfänger 1 bis 3 ausgesandt wird und in einem Lichtempfänger 20 empfangen wird, welcher am Meßpunkt P bzw. im Schallsender 10 angeordnet ist. Hierbei steuert die Recheneinheit 13 die Lichtsender 18 der drei Meßempfänger 1 bis 3 derart an, daß die Lichtpulse mit kurzem zeitlichen Versatz ausgesandt und mit demselben Versatz am Lichtempfänger 20 empfangen werden. Der Signalwandler 22 beinhaltet eine Zählschaltung, die derart ausgebildet ist, daß der Signalwandler 22 erst dann ein Ausgangssignal zum Schließen des steuerbaren Schalters 15 abgibt, wenn von allen Meßempfängern 1 bis 3 Lichtpulse ausgesandt wurden. Auf diese Weise wird sichergestellt, daß die Schallwege zwischen Meßpunkt P und allen drei Meßempfängern M1 bis M3 frei sind. Sobald der Signalwandler den elektronischen Schalter 15 schließt, wird der Oszillator 11 mit dem Eingang des Leistungsverstärkers 12 verbunden, so daß dieser den Wandler 13 mit einem entsprechenden Ultraschallsignal ansteuert. Der Empfang des abgestrahlten Ultraschallsignals geschieht wie oben beschrieben, die Berechnung der Laufzeiten ebenfalls.

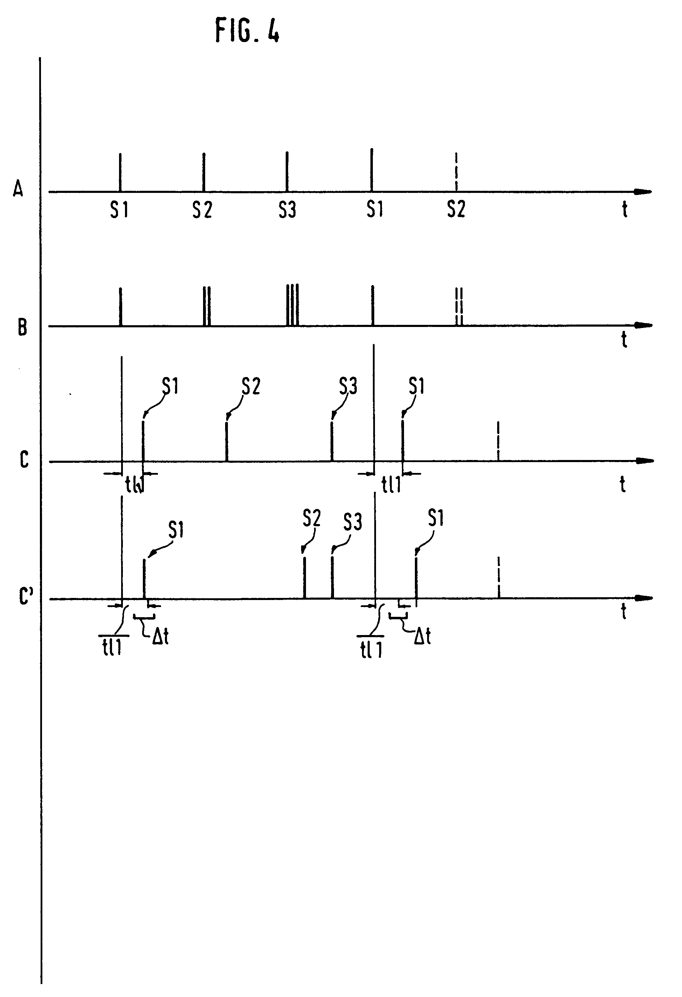

Im folgenden wird anhand der Fig. 4 die Arbeitsweise des in Fig. 2 gezeigten Gerätes näher beschrieben, wobei in diesem Fall mehrere Sender 10 vorgesehen sind, deren Taktgeneratoren 17 synchronisiert laufen. Für den Fall, daß drei Sender 10 vorgesehen sind und ihre Taktgeneratoren 17 so ausgelegt sind, daß die Schallsignale der drei Wandler in äquidistanten Zeitpunkten abgestrahlt werden, ergeben sich Ausgangssignale, wie sie in Fig. 4A gezeigt sind.

Die Codegeneratoren 16 eines jeden Senders 10 codieren die Lichtsignale unterschiedlich, so daß jedem Sender 10 ein anderscodiertes Lichtsignal zugeordnet ist. Dieser Sachverhalt ist Fig. 4B zu entnehmen, wobei als Code in diesem Fall ganz einfach die Pulsanzahl dient. Man kann die in Fig. 4B gezeigten Signale auch mit den Digital-Worten 100, 110 und 111 beschreiben.

In Fig. 4C sind die Schallsignale S1 bis S3 nach Durchlaufen des Raumes zwischen Meßpunkt und Meßort gezeigt, also nach einer zeitlichen Verzögerung, die für das Signal S1 mit tl1 in Fig. 4C angedeutet ist. Im Verlauf mehrerer Messungen, während derer sich das Meßobjekt bzw. die dazu gehörigen Meßpunkte bewegen, werden verschiedene Laufzeiten tl1 gemessen und eine definierte Anzahl hiervon zur Bildung eines Mittelwertes aufsummiert. Dies geschieht vorzugsweise derart, daß zu jedem neu einlaufenden Meßwert ein n-Messungen vorher eingelaufener Meßwert von der gespeicherten Summe subtrahiert wird, so daß eine gleitende Mittelwertsbildung über die letzten n-Messungen durchgeführt wird.

Man kann nun davon ausgehen, daß bei Vorgabe einer definierten Maximalgeschwindigkeit der Meßpunkte (z. B. maximale Bewegungsgeschwindigkeit eines Läufers) die Laufzeiten der Schallsignale sich immer in einem gewissen Bereich Δt um den zuvor ermittelten Mittelwert t̅l̅1̅ liegen. Wenn nun ein Schallsignal S1 eintrifft, das innerhalb dieses Bereiches liegt (Fig.4C′-links), so wird es als "verwertbar" eingestuft und der weiteren Verrechnung zugrundegelegt. Wenn das eintreffende Schallsignal S1 aber außerhalb des Bereiches Δt liegt (Fig. 4C′-rechts), so wird das Signal verworfen, da es z. B. aus einer Reflexion des Ultraschallsignals, evtl. auch eines Signals eines anderen, später abgestrahlten Signals (S2, S3) stammt. Auf diese Weise wird eine Erhöhung der Fehlersicherheit erzielt.

Eine weitere Erhöhung der Fehlersicherheit (dies kann auch eine Alternativlösung darstellen) umfaßt wieder die gleitende Mittelwertsbildung, jedoch in diesem Fall nicht hinsichtlich der zu erwartenden Laufzeit, sondern hinsichtlich der zu erwartenden Schallamplitude. In diesem Fall wären also die mittleren Schallamplituden für jeden Sender bzw. für jedes eintreffende Signal gebildet und diejenigen eintreffenden Schallsignale als fehlerbehaftet eingestuft, die außerhalb eines gewissen Erwartungsbereiches rings um den Mittelwert liegen. Dadurch, daß (in beiden Fällen) der gleitende Mittelwert gebildet wird, kann man einer langsamen Veränderung der Signallaufzeiten bzw. Schallamplituden Rechnung tragen, die bei kontinuierlicher Annäherung oder Entfernung des Meßobjektes von dem Meßempfängern auftritt.

Die oben beschriebene Amplitudenschwelle wird bei einer weiteren bevorzugten Ausführungsform der Erfindung (ggfs. zusätzlich) über die Amplitude des empfangenen Lichtsignals gebildet, wobei die dazu notwendige Anordnung in jedem Fall den Lichtsender 18 am Orte des Schallwandlers 13 umfassen muß. Bei dieser Anordnung wird weiterhin darauf geachtet, daß die Abstrahlcharakteristik (Schall- bzw. Lichtintensität über den Raumwinkel) von Schallwandler 13 und Lichtsender 18 im wesentlichen gleich ist. In diesem Fall muß die Beleuchtungsstärke am Meßort in einer Abhängigkeit zur empfangenen Schallintensität stehen, wobei hier zu berücksichtigen ist, daß die (entfernungsabhängige) Dämpfung des Lichts wesentlich geringer ist als diejenige der Schallwelle, so daß also über die Entfernung und den Schall-Dämpfungsfaktor ein weiterer Faktor Eingang in die Errechnung des zu erwartenden Schallpegels Eingang findet.

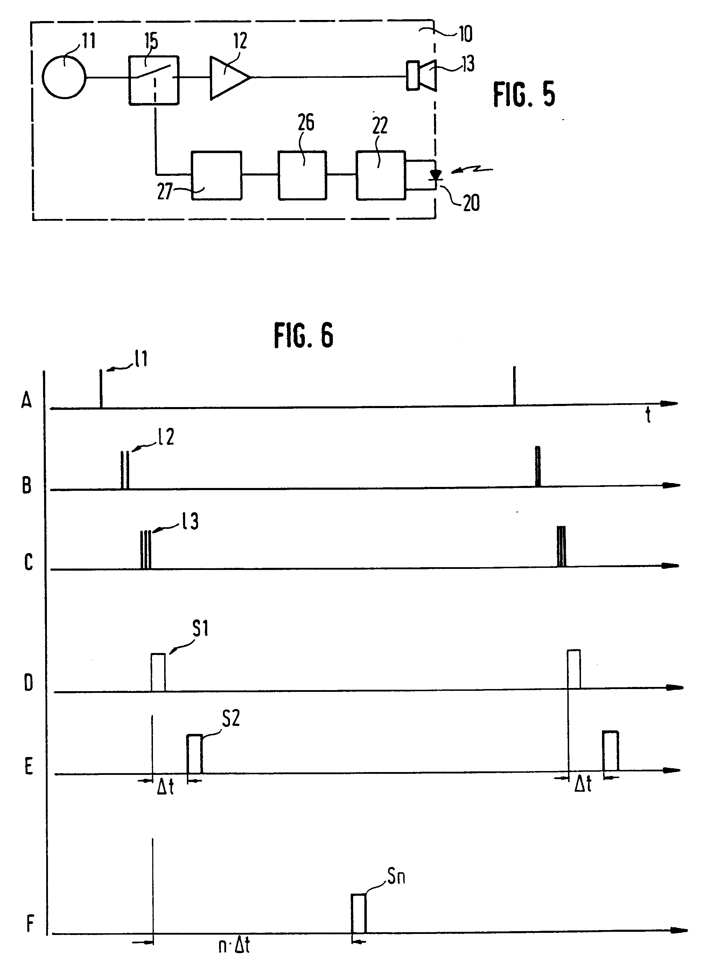

Im folgenden wird eine weiter bevorzugte Ausführungsform der Erfindung, die in ihrer Grundkonzeption der nach Fig. 3 ähnelt, anhand der Fig. 5 und 6 näher beschrieben.

Bei dieser bevorzugten Ausführungsform der Erfindung liegt der Lichtempfänger 20 wieder am Orte des Senders 10, jedoch ist dem Signalwandler 22 ein Decodierer 26 nachgeschaltet. Zwischen dem Decodierer 26 und dem elektronischen Schalter 25 liegt ein Verzögerungsglied 27. Diese Ausführungsform der Erfindung ist zur Verwendung mit mehreren Sendern 10 geeignet, wobei dann jeder der Sender 10 ein Verzögerungsglied 27 mit einer von allen anderen verschiedenen Verzögerungszeit aufweist.

Weiterhin wird von jedem Meßempfänger 1 bis 3, der einen Lichtsender 18 aufweist, ein anders codiertes Lichtsignal l1 bis l2 ausgesandt, wobei die Sendezeitpunkte um definierte Beträge zueinander versetzt sind. Dies ist in Fig. 6A bis 6C gezeigt.

Jeder Decodierer 26 in einem Sender 10 ist nun derart ausgebildet, daß an seinem Ausgang dann ein "Start"-Signal erscheint, wenn von allen drei Meßempfängern 1 bis 3 ein Lichtsignal l1 bis l3 empfangen wurde. Das erste Verzögerungsglied 27 eines ersten Senders 10 ist auf Verzögerung "0" eingestellt, das Verzögerungsglied 27 eines zweiten Senders 10 auf die Verzögerungszeit Δt (Fig. 6E). Der n-te Empfänger 10 weist dann ein Verzögerungsglied 27 auf, dessen Verzögerungszeit n x Δt beträgt. Das zugehörige Schallsignal Sn wird dann um die entsprechende Zeit verzögert gegenüber dem ersten Signal S1 abgestrahlt (Fig. 6F). Mit dieser Anordnung ist eine exakte Synchronisierung der Sender 10 untereinander möglich, so daß die oben beschriebenen Fehlererkennungsmaßnahmen leicht getroffen werden können. Darüber hinaus wird der freie Schallweg zwischen Sender und Empfänger überprüft und ein Anfangszeitpunkt zur Bestimmung der Schallaufzeiten definiert. Schließlich ist eine eindeutige Identifizierung der "beobachteten" Schallquelle ebenso möglich, wie bei der Ausführungsform nach Fig. 2, da bei der Ausführungsform nach Fig. 5 jedem Empfänger 10 ein Sendezeitpunkt zugeordnet ist, während bei der Ausführungsform nach Fig. 2 jeder Sender sein Identifizierungsmerkmal über die Codiereinheit 16 mit dem Lichtimpuls L selbst abstrahlt.

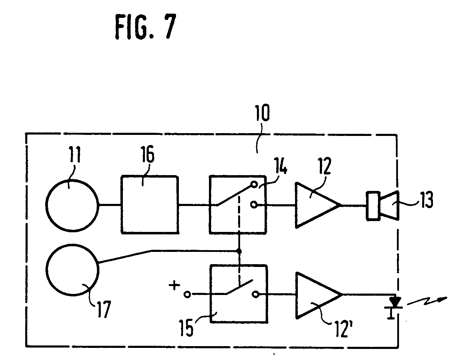

Bei einer weiteren bevorzugten Ausführungsform der Erfindung, die in Fig. 7 schematisiert dargestellt ist, werden vom Taktgenerator 17 in einem Sender 10 sowohl ein Lichtpuls, als auch ein Schallpuls getriggert, wobei der Schallpuls über einen Codegenerator 16 zwischen Oszillator 11 und elektronischem Schalter 14 codiert ist. Bei Verwendung mehrerer Sender 10 weist jeder einen besonders eingestellten Codegenerator 16 auf, so daß jedes Schallsignal einem bestimmten Sender 10 zugeordnet werden kann. Diese Zuordnung geschieht in der Recheneinheit 23.

Bei einer weiteren, hier nicht figürlich dargestellten bevorzugten Ausführungsform der Erfindung werden Licht- und Schallimpuls mit dem gleichen Code versehen, so daß sowohl der abgesandte Lichtpuls (zur Bestimmung des Anfangszeitpunktes) als auch der empfangene Schallimpuls einem bestimmten Sender 10 zugeordnet werden können.

Da es in der Praxis durchaus möglich ist, daß ein Schallimpuls über Reflexionen mehrmals am Empfänger erscheinen kann, ist es von Vorteil, wenn ein großer Vorrat an Identifizierungsmerkmalen (Code) für jeden Sender 10 vorhanden ist. Dies geschieht dadurch, daß jeder Codegenerator 16 die zugehörigen Schall- und/oder Lichtsignale mit wechselnden, in der Recheneinheit 23 bekannten Codes versieht, wobei dieser Vorrat an Codes wiederum für jeden Schallsender 10 unverwechselbar zu anderen Schallsendern 10 ist. Die Recheneinheit 23 ist in diesem Fall so ausgebildet, daß die Reihenfolge der eintreffenden Schallsignale daraufhin überprüft wird, ob die geprüfte Reihenfolge für korrekte Signale "möglich" ist, oder ob ein über Umwege zum Empfänger gelangtes Schallsignal vorliegen muß. Der letztere Fall liegt dann vor, wenn ein Schallsignal vor dem Zeitpunkt eintrifft, zu welchem das Schallsignal des vor oder nach dem betreffenden Sender getriggerten Senders noch nicht oder schon am Empfänger eingetroffen ist.

Ein wesentlicher Punkt der vorliegenden Erfindung ist also die Überprüfung des Schallweges durch Lichtsignale. Dieses "Prinzip" läßt sich somit auch bei herkömmlichen Anlagen verwenden, bei denen eine Kabelverbindung zwischen Meßpunkt bzw. Schallsender und Auswerteinrichtung besteht, wobei der Schallsender über das Kabel angesteuert oder getriggert wird. Weiterhin genügt insbesondere bei nahe zusammenstehenden Meßorten unter Umständen ein einziges Paar von Lichtsendern und Lichtempfängern zur Überprüfung des Schallweges.

## Patentansprüche

1. Verfahren zur Fehlerverminderung bei der Messung räumlicher Bewegung von Meßpunkten mittels Ultraschallsignalen, wobei aus der Laufzeit der Ultraschallsignale zwischen Schallsendern an mindestens zwei Meßpunkten unbekannter Raumposition und Schallempfängern an Meßorten bekannter Raumpositionen deren wechselseitige Entfernungen und damit die Positionen der jeweiligen Meßpunkte herleitbar sind,
**dadurch gekennzeichnet,** daß
der Raumbereich zwischen Schallsendern und Schallempfängern mittels Lichtwellen auf Hindernisfreiheit überprüft wird, die Lichtwellen mindestens von einem Lichtsender (15) an einem der Meßorte ausgesandt und als pulsförmige Signale ausgebildet werden,
der Anfangs- oder Endzeitpunkt für jedes Ultraschallsignal in einen definierten zeitlichen Abstand zu einem jeden pulsförmigen Signal gelegt werden und
die pulsförmigen Signale mit Identifizierungsmerkmalen (Wellenlänge, PCM, PDM) versehen und von mindestens einem Lichtempfänger an einem der Meßpunkte empfangen werden, die empfangenen pulsförmigen Signale derart nach einem Empfang abgefragt und verarbeitet werden, daß von einem Meßpunkt nur dann ein Ultraschallsignal abgestrahlt wird, wenn das empfangene pulsförmige Signal ein vorbestimmtes Identifizierungsmerkmal aufweist.

2. Verfahren nach Anspruch 1,
**dadurch gekennzeichnet,**
daß jedem Meßpunkt ein Schallsender und jedem Meßort ein Schallempfänger zugeordnet sind.

3. Verfahren nach einem der vorhergehenden Ansprüche,
**dadurch gekennzeichnet,**
daß die elektromagnetischen Wellen als pulsförmige Signale ausgesandt und der Anfangs- oder Endzeitpunkt für jedes Ultraschallsignal in einem definierten zeitlichen Abstand zu einem jeden pulsförmigen Signal gelegt werden.

4. Verfahren nach Anspruch 3,
**dadurch gekennzeichnet,**
daß die Laufzeit der Ultraschallsignale aus der Differenz der Empfangszeitpunkte von Ultraschallsignalen und pulsförmigen Signalen hergeleitet wird.

5. Verfahren nach einem der vorhergehenden Ansprüche,
**dadurch gekennzeichnet,**
daß ein Amplituden-Erwartungsbereich in Abhängigkeit von der gemessenen Empfangs- bzw. Beleuchtungsstärke (E = ϑ/A = I/r²) der elektromagnetischen Wellen bzw. Lichtwellen eingestellt wird und beim Empfang außerhalb des Amplituden-Erwartungsbereiches liegende Ultraschallsignale verworfen werden.

6. Verfahren nach den Ansprüchen 2 und 3,
**dadurch gekennzeichnet,**
daß jedem Meßpunkt ein Lichtempfänger und jedem Meßort ein Lichtsender zugeordnet sind und in definiertem Abstand zu dem Beginn des Empfangs eines Lichtpulses ein Ultraschallsignal ausgesandt wird.

7. Verfahren nach einem der vorhergehenden Ansprüche, wobei mindestens zwei Schallsender vorgesehen sind,
**dadurch gekennzeichnet,**
daß die Ultraschallsignale eines jeden Schallsenders mit einem Identifizierungsmerkmal (Frequenz, PCM, PDM) versehen und in definiertem zeitlichen Abstand voneinander abgestrahlt werden.

8. Verfahren nach einem der vorhergehenden Ansprüche,
**dadurch gekennzeichnet,**
daß ein empfangenes erstes Ultraschallsignal dann verworfen wird, wenn es innerhalb eines definierten Zeitabschnittes vor oder nach dem Empfang eines zweiten, später ausgesandten Ultraschallsignales empfangen wird.

9. Verfahren nach einem der vorhergehenden Ansprüche,
**dadurch gekennzeichnet,**
daß der (gleitende) Mittelwert über eine definierte Anzahl von Ultraschallsignal-Laufzeiten für jeden Meßpunkt gebildet wird und ein empfangenes Ultraschallsignal dann verworfen wird, wenn es eine Laufzeit außerhalb eines definierten Zeitabschnittes um den Mittelwert aufweist.

10. Verfahren nach Anspruch 6,
**dadurch gekennzeichnet,**
daß die Lichtpulse mit Idendifizierungsmerkmalen (Wellenlänge, PCM, PDM) versehen werden, die in jedem Lichtempfänger abgefragt und verarbeitet werden.

11. Vorrichtung zur Durchführung des Verfahrens nach Anspruch 1 mit Schallsendern (10) und Schallempfängern (1-3) zum Aussenden und Empfangen von Schallsignalen und mit einer Recheneinheit (23) zum Bestimmen der Laufzeit der Ultraschallsignale zwischen den Schallsendern (10) und den Schallempfängern (1-3), die an mindestens zwei Meßpunkten (P) unbekannter Raumposition und an Meßorten (M1 bis M3) bekannter Raumposition angeordnet sind, und zum Bestimmen der Raumposition eines jeden Meßpunktes (P) aus den Laufzeiten,
**dadurch gekennzeichnet,** daß
jeder Schallsender (10) mit einem Lichtempfänger (20) und mindestens einer der Schallempfänger (1-3) mit einem Lichtsender (18) zur Überprüfung der Hindernisfreiheit zwischen Schallsender (10) und Schallempfänger (1-3) versehen ist, der Lichtsender (18) Lichtwellen als Lichtpulse aussendet,
die Lichtempfänger (20) der Schallsender (10) derart mit Schallwandlern (13) der Schallsender (10) in Verbindung stehen, daß die Schallsignale in einem definierten zeitlichen Abstand zu empfangenen Lichtpulsen abgestrahlt werden, Kodierungseinrichtungen (23) für den mindestens einen Lichtsender (18) vorgesehen sind, welche die Lichtpulse mit Identifizierungsmerkmalen (Wellenlänge, PCM, PDM) versehen, und daß
die Schallsender (10) derart ausgebildet sind, daß ein Ultraschallsignal nur dann abgestrahlt wird, wenn der empfangene Lichtpuls ein definiertes Identifizierungsmerkmal aufweist.

12. Vorrichtung nach Anspruch 11,
**dadurch gekennzeichnet,**
daß jedem Meßpunkt (P) ein Schallsender (10) und jedem Meßort (M1-M3) ein Schallempfänger (1-3) zugeordnet wird.

13. Vorrichtung nach einem der Ansprüche 11 oder 12,
**dadurch gekennzeichnet,**
daß die Lichtsender (18) oder Lichtempfänger (20) bei den Schallsendern (10) angeordnet sind und derart mit Schallwandlern (13) der Schallsender (10) in Verbindung stehen, daß die Schallsignale in einem definierten zeitlichen Abstand zu Lichtpulsen abgestrahlt werden.

14. Vorrichtung nach einem der Ansprüche 11 bis 13,
**dadurch gekennzeichnet,**
daß die Schallwandler (13) gemeinsam mit Lichtsendern (18) angeordnet sind und mit einer gemeinsamen Steuerung (Taktgenerator 17) in gesteuerter Verbindung stehen.

15. Vorrichtung nach den Ansprüchen 12 und 13,
**dadurch gekennzeichnet,**
daß in jedem Schallsender (10) ein Lichtempfänger (20) und in jedem Schallempfänger (1-3) ein Lichtsender (18) angeordnet ist, und daß jeder Lichtempfänger (20) mit dem Schallwandler (13) des dazugehörigen Schallsenders (10) in einer dertigen steuernden Verbindung steht, daß dann ein Schallimpuls ausgestrahlt wird, wenn der Lichtempfänger (20) Lichtimpulse von allen Lichtsendern (18) empfangen hat.

16. Vorrichtung nach einem der Ansprüche 1 bis 15,
**dadurch gekennzeichnet,**
daß die Schallsender (10) miteinander in zeitlicher steuernden Verbindung stehen und zueinander synchronisiert Ultraschallimpulse (nacheinander) abstrahlen.

17. Vorrichtung nach Anspruch 13,
**dadurch gekennzeichnet,**
daß die Recheneinheit (23) derart ausgebildet ist, daß die Laufzeit der Ultraschallsignale aus der Differenz der Empfangszeitpunkte von Ultraschallsignalen und pulsförmigen Signalen herleitbar ist.

## Claims

1. Method for error reduction in the measurement of the spatial movement of measuring points by means of ultrasonic signals, it being possible to derive from the propagation time of the ultrasonic signals between sound transmitters at at least two measuring points of unknown spatial position and sound receivers at measuring locations of known spatial positions their reciprocal distances and hence the positions of the appropriate measuring points, characterized in that the spatial area between sound transmitters and sound receivers is verified for freedom from obstacles by means of light waves, the light waves are emitted at least from one opto-transmitter (15) at one of the measuring locations and are in the form of pulse-like signals, the initial or final time for each ultrasonic signal is set at a defined time interval with respect to any pulse-like signal and the pulse-like signals are provided with identification characteristics (wavelength, PCM, PDM) and are received by at least one opto-receiver at one of the measuring points, the pulse-like signals received are scanned and processed after a reception in such a way that an ultrasonic signal is only emitted from a measuring point when the pulse-like signal received has a pre-determined identification characteristic.

2. Method according to Claim 1, characterized in that one sound transmitter is allocated to each measuring point and one sound receiver to each measuring location.

3. Method according to one of the preceding Claims, characterized in that the electromagnetic waves are emitted in the form of pulse-like signals and the initial or final time for each ultrasonic signal is set at a defined time interval with respect to any pulse-like signal.

4. Method according to Claim 3, characterized in that the propagation time of the ultrasonic signals is derived from the difference between the reception times of ultrasonic signals and pulse-like signals.

5. Method according to one of the preceding Claims, characterized in that an amplitude expectation range is set as a function of the measured reception strength and/or illuminance (E = ϑ/A = I/r²) of the electromagnetic waves and/or light waves and ultrasonic signals outside the amplitude expectation range on reception are rejected.

6. Method according to Claims 2 and 3, characterized in that an opto-receiver is allocated to each measuring point and an opto-transmitter to each measuring location and an ultrasonic signal is emitted at a defined interval with respect to the start of the reception of a light pulse.

7. Method according to one of the preceding Claims, at least two sound transmitters being provided, characterized in that the ultrasonic signals of any sound transmitter are provided with an identification characteristic (frequency, PCM, PDM) and are emitted at a defined time interval from each other.

8. Method according to one of the preceding Claims, characterized in that a first ultrasonic signal received is rejected if it is received within a defined time segment before or after the reception of a second ultrasonic signal emitted later.

9. Method according to one of the preceding Claims, characterized in that the (variable) mean value over a defined number of ultrasonic signal propagation times is formed for each measuring point and an ultrasonic signal received is rejected if it has a propagation time outside a defined time segment about the mean value.

10. Method according to Claim 6, characterized in that the light pulses are provided with identification characteristics (wavelength, PCM, PDM) which are scanned and processed in each opto-receiver.

11. Apparatus for implementing the method according to Claim 1 with sound transmitters (10) and sound receivers (1-3) for emitting and receiving sound signals and with a processor (23) for determining the propagation time of the ultrasonic signals between the sound transmitters (10) and the sound receivers (1-3), which are arranged at at least two measuring points (P) of unknown spatial position and at measuring locations (M1 to M3) of known spatial position, and for determining the spatial position of any measuring point (P) from the propagation times, characterized in that each sound transmitter (10) is provided with an opto-receiver (20) and at least one of the sound receivers (1-3) with an opto-transmitter (18) for verifying the freedom from obstacles between sound transmitters (10) and sound receivers (1-3), the opto-transmitter (18) emits light waves in the form of light pulses, the opto-receivers (20) of the sound transmitters (10) are connected to sound transducers (13) of the sound transmitters (10) in such a way that the sound signals are emitted at a defined time interval with respect to the light pulses received, coding devices (23) are provided for the at least one opto-transmitter (18) which provide the light pulses with identification characteristics (wavelength, PCM, PDM) and that the sound transmitters (10) are designed in such a way that an ultrasonic signal is only emitted when the light pulse received has a defined identification characteristic.

12. Apparatus according to Claim 11, characterized in that one sound transmitter (10) is allocated to each measuring point (P) and one sound receiver (1-3) to each measuring location (M1-M3).

13. Apparatus according to one of Claims 11 or 12, characterized in that the opto-transmitters (18) or opto-receivers (20) are arranged at the sound transmitters (10) and are connected to sound transducers (13) of the sound transmitters (10) in such a way that the sound signals are emitted at a defined time interval with respect to light pulses.

14. Apparatus according to one of Claims 11 to 13, characterized in that the sound transducers (13) are arranged together with opto-transmitters (18) and are in controlled connection with a common control (clock generator 17).

15. Apparatus according to Claims 12 and 13, characterized in that an opto-receiver (20) is arranged in each sound transmitter (10) and an opto-transmitter (18) in each sound receiver (1-3) and that each opto-receiver (20) is in a controlling connection with the sound transducer (13) of the associated sound transmitter (10) such that a sound pulse is emitted when the opto-receiver (20) has received light pulses from all opto-transmitters (18).

16. Apparatus according to one of Claims 1 to 15, characterized in that the sound transmitters (10) are connected together in a time-wise controlling manner and emit ultrasonic pulses (successively) in synchronization with each other.

17. Apparatus according to Claim 13, characterized in that the processor (23) is designed in such a way that the propagation time of the ultrasonic signals can be derived from the difference between the reception times of ultrasonic signals and pulse-like signals.

## Revendications

1. Procédé de réduction des erreurs dans le cadre de la mesure d'un mouvement spatial de points de mesure au moyen de signaux ultrasonores, dans lequel, à partir de la durée de propagation des signaux ultrasonores entre des générateurs acoustiques en deux points de mesure, au moins, d'une position spatiale inconnue, et des récepteurs acoustiques en des emplacements de mesure de positions spatiales connues, il est possible de déduire les distances mutuelles entre ces générateurs et récepteurs, donc la position des points de mesure, caractérisé en ce que l'absence d'obstacles dans la zone spatiale, comprise entre les générateurs et récepteurs acoustiques, est vérifiée par des ondes lumineuses, les ondes lumineuses sont émises par un émetteur de lumière (15), au moins, en l'un des emplacements de mesure, et conformées sous forme de signaux en forme d'impulsions, l'instant initial ou final est fixé, pour chaque signal ultrasonore, dans un intervalle de temps défini par rapport à chaque signal en forme d'impulsions, et les signaux en forme d'impulsions sont munis de critères d'identification (longueur d'onde, modulation par codage d'impulsions, modulation d'impulsions en durée), et sont reçus par un récepteur de lumière, au moins, en l'un des points de mesure, les signaux en forme d'impulsions reçus sont interrogés et traités, après une réception, de sorte qu'un signal ultrasonore n'est émis par un point de mesure, qu'à partir du moment où le signal en forme d'impulsions reçu présente un critère d'identification prédéfini.

2. Procédé suivant la revendication 1, caractérisé en ce qu'un générateur acoustique est associé à chaque point de mesure, et un récepteur acoustique à chaque emplacement de mesure.

3. Procédé suivant l'une quelconque des revendications précédentes, caractérisé en ce que les ondes électromagnétiques sont émises sous forme de signaux en forme d'impulsions, et l'instant initial ou final est fixé, pour chaque signal ultrasonore, dans un intervalle de temps défini par rapport à chaque signal en forme d'impulsions.

4. Procédé suivant la revendication 3, caractérisé en ce que la durée de propagation des signaux ultrasonores est déduite de la différence des instants de réception des signaux ultrasonores et des signaux en forme d'impulsions.

5. Procédé suivant l'une quelconque des revendications précédentes, caractérisé en ce que le domaine probable des amplitudes est réglé en fonction de l'intensité lumineuse et/ou de réception mesurée (E = ϑ/A = I/r²) des ondes électromagnétiques et/ou lumineuses, et les signaux ultrasonores, situés à l'extérieur du domaine probable des amplitudes lors de la réception, sont rejetés.

6. Procédé suivant les revendications 2 et 3, caractérisé en ce qu'un récepteur de lumière est associé à chaque point de mesure et un émetteur de lumière à chaque emplacement de mesure, et un signal ultrasonore est émis dans un intervalle défini par rapport au début de la réception d'une impulsion lumineuse.

7. Procédé suivant l'une quelconque des revendications précédentes, deux générateurs acoustiques, au moins, étant prévus, caractérisé en ce que les signaux ultrasonores de chaque générateur acoustique sont munis d'un critère d'identification (fréquence, modulation par codage d'impulsions, modulation d'impulsions en durée), et sont émis dans un intervalle de temps défini les uns par rapport aux autres.

8. Procédé suivant l'une quelconque des revendications précédentes, caractérisé en ce qu'un premier signal ultrasonore reçu est rejeté, lorsqu'il est reçu dans un intervalle de temps défini avant ou après la réception d'un deuxième signal ultrasonore, émis ultérieurement.

9. Procédé suivant l'une quelconque des revendications précédentes, caractérisé en ce que la valeur moyenne (variable) est formée pour chaque point de mesure par rapport à un nombre défini de durées de propagation des signaux ultrasonores, et un signal ultrasonore reçu est rejeté, s'il présente une durée de propagation externe à un intervalle de temps défini autour de la valeur moyenne.

10. Procédé suivant la revendication 6, caractérisé en ce que les impulsions lumineuses sont munies de critères d'identification (longueur d'onde, modulation par codage d'impulsions, modulation d'impulsions en durée), qui sont interrogés et traités dans chaque récepteur de lumière.

11. Dispositif pour la réalisation du procédé suivant la revendication 1, avec des générateurs acoustiques (10) et des récepteurs acoustiques (1 à 3) pour l'émission et la réception de signaux sonores, et avec une unité de calcul (23) pour déterminer la durée de propagation des signaux ultrasonores entre les générateurs acoustiques (10) et les récepteurs acoustiques (1 à 3), disposés en deux points de mesure au moins (P) d'une position spatiale inconnue et en des emplacements de mesure (M1 à M3) d'une position spatiale connue, et pour déterminer la position spatiale de chaque point de mesure (P) à partir des durées de propagation, caractérisé en ce que chaque générateur acoustique (10) est muni d'un récepteur de lumière (20), et l'un des récepteurs acoustiques (1 à 3), au moins, d'un émetteur de lumière (18), pour vérifier l'absence d'obstacles entre le générateur acoustique (10) et le récepteur acoustique (1 à 3), l'émetteur de lumière (18) émet des ondes lumineuses sous forme d'impulsions lumineuses, les récepteurs de lumière (20) des générateurs acoustiques (10) sont reliés à des transducteurs acoustiques (13) des générateurs acoustiques (10), de sorte que les signaux sonores sont émis dans un intervalle de temps défini par rapport aux impulsions lumineuses reçues, des dispositifs de codage (23), qui munissent les impulsions lumineuses de critères d'identification (longueur d'onde, modulation par codage d'impulsions, modulation d'impulsions en durée), sont prévus pour l'émetteur de lumière (18), au moins, et en ce que les générateurs acoustiques (10) ont une réalisation telle, qu'un signal ultrasonore n'est émis qu'à partir du moment où l'impulsion lumineuse reçue présente un critère d'identification défini.

12. Dispositif suivant la revendication 11, caractérisé en ce qu'un générateur acoustique (10) est associé à chaque point de mesure (P) et un récepteur acoustique (1 à 3) à chaque emplacement de mesure (M1 à M3).

13. Dispositif suivant l'une quelconque des revendications 11 et 12, caractérisé en ce que les émetteurs de lumière (18) ou récepteurs de lumière (20) sont disposés sur les générateurs acoustiques (10), et sont reliés aux transducteurs acoustiques (13) des générateurs acoustiques (10), de sorte que les signaux sonores sont émis dans un intervalle de temps défini par rapport aux impulsions lumineuses.

14. Dispositif suivant l'une quelconque des revendications 11 à 13, caractérisé en ce que les transducteurs acoustiques (13) sont disposés conjointement avec des émetteurs de lumière (18), et sont reliés à une commande commune (horloge 17).

15. Dispositif suivant les revendications 12 et 13, caractérisé en ce qu'un récepteur de lumière (20) est disposé dans chaque générateur acoustique (10), et un émetteur de lumière (18) dans chaque récepteur acoustique (1 à 3), et en ce que chaque récepteur de lumière (20) est en liaison de commande avec le transducteur acoustique (13) du générateur acoustique (10) correspondant, de sorte qu'une impulsion sonore est émise lorsque le récepteur de lumière (20) a reçu des impulsions lumineuses de tous les émetteurs de lumière (18).

16. Dispositif suivant l'une quelconque des revendications 1 à 15, caractérisé en ce que les générateurs acoustiques (10) sont en liaison de commande mutuelle dans le temps, et émettent en synchronisme mutuel des impulsions ultrasonores (successivement).

17. Dispositif suivant la revendication 13, caractérisé en ce que l'unité de calcul (23) a une réalisation telle, que la durée de propagation des signaux ultrasonores peut être déduite de la différence des instants de réception des signaux ultrasonores et des signaux en forme d'impulsions.
